# EUROPEAN PATENT APPLICATION

(11) **EP 1 364 844 A2**
(43) Date of publication of application: **26.11.2003**
(21) Application number: 03010899.7
(22) Date of filing: 15.05.2003
(51) Int. Cl.: B60R 21/26

(54) **Airbag igniter**

(30) Priority: 20.05.2002 US 381920 P; 30.09.2002 US 261330
(71) Applicant: OSRAM-SYLVANIA INC., Danvers, MA 01923 (US)
(72) Inventor: Baldensperger, Douglas T., Russel, Pennsylvania 16345 (US)
(74) Representative: Pokorny, Gerd

(57) **Abstract**

An airbag igniter (10) comprises a cup-shaped metal can (12) with a ceramic disc (14) having a conductive metal plating pattern (16) thereon positioned within the metal can (12). An RF filtering unit (18) is fixed to the disc (14). Two gold-plated, electrically conductive pins (20, 22) pass through the disc (14) and make appropriate electrical connection to the RF filtering unit (18). A sealing material (24) encloses the unit, filling the remaining volume of the cup-shaped can (12).

## Description

This application claims priority from Provisional Patent Application No 60/381,920_{,} filed May 20, 2002.

### TECHNICAL FIELD

This invention relates to igniters and more particularly to airbag igniters for automobile safety devices.

### BACKGROUND ART

Current airbag igniters utilize a two-piece construction. One of these pieces comprises a solid metal component having two gold plated pins attached via soldering or welding that is mated with a two position connector containing a filtering device to suppress RF and EMI interference. While workable, this construction is costly and an important consideration in an industry trying to control costs.

### DISCLOSURE OF INVENTION

It is, therefore, an object of the invention to obviate the disadvantages of the prior art.

It is another object of the invention to enhance to reduce the number of components utilized in airbag igniters.

These objects are accomplished, in one aspect of the invention, by the provision of an airbag igniter that comprises a cup-shaped metal can with an electrically insulating disc having a conductive metal plating pattern thereon positioned within the metal can. The disc can be a ceramic material but preferably is FR 4, a standard printed circuit board material. An RF filtering unit is fixed to the disc. Two gold-plated, electrically conductive pins pass through the disc and make appropriate electrical connection to the RF filtering unit. A sealing material encloses the unit filling the remaining volume of the cup-shaped can. This construction eliminates the need for a two-way filtered connector, since the igniter itself contains the filtering unit.

### BRIEF DESCRIPTION OF THE DRAWINGS

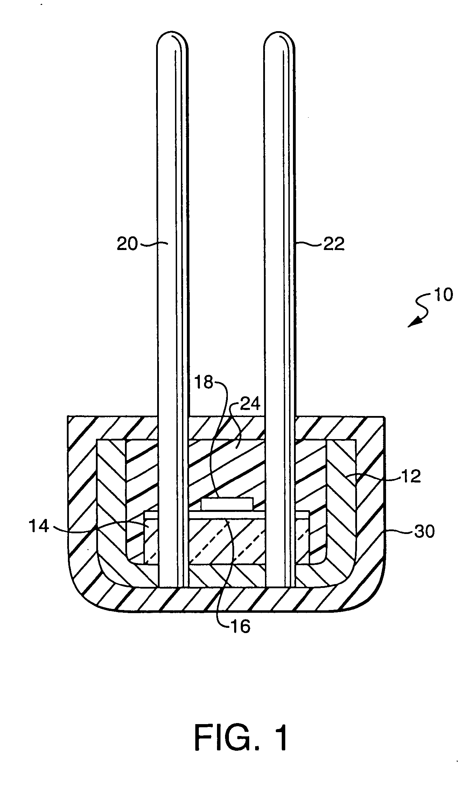

The single figure is a elevational view, in section, of an embodiment of the invention.

### BEST MODE FOR CARRYING OUT THE INVENTION

For a better understanding of the present invention, together with other and further objects, advantages and capabilities thereof, reference is made to the following disclosure and appended claims in conjunction with the above-described drawings.

Referring now to the drawing with greater particularity, there is shown an airbag igniter 10 that comprises a cup-shaped metal can 12 with a ceramic disc 14 having a conductive metal plating pattern 16 thereon positioned within the metal can 12. An RF filtering unit 18 is fixed to the disc 14. Two gold-plated, electrically conductive pins 20, 22 pass through the disc 14 and make appropriate electrical connection to the RF filtering unit 18. A sealing material 24 encloses the unit, filling the remaining volume of the cup-shaped can 12. This construction eliminates the need for a two-way filtered connector, since the igniter itself contains the filtering unit.

The sealing material is preferably an epoxy that can be cured by the application of ultraviolet radiation, heat or ambient air. Such epoxies can be, for example, a one part heat cured epoxy.

In an alternate embodiment a plastic resin 30 such as nylon can be molded over the final assembly.

While there have been shown and described what are at present considered to be the preferred embodiments of the invention, it will be apparent to those skilled in the art that various changes and modification can be made herein without departing from the scope of the invention as defined by the appended claims.

## Claims

1. An airbag igniter (10) comprising:
a cup-shaped metal can (12);
an electrically insulating disc (14) having a conductive metal plating pattern (16) thereon positioned within said metal can (12);
an RF filtering unit (18) fixed to said disc (14);
two gold-plated, electrically conductive pins (20, 22) passing through said disc (14) and making appropriate electrical connection to said RF filtering unit (18); and
a sealing material (24) enclosing said unit filling the remaining volume of said cup-shaped can.

2. The airbag igniter of Claim 1 wherein said sealing material (24) is an epoxy selected from the group of epoxies curable by ultra violet radiation, heat or ambient air.

3. The airbag igniter of Claim 1 wherein said igniter (10) is over-coated by a plastic resin.
